# EUROPEAN PATENT SPECIFICATION

(11) **EP 4 116 741 B1**
(45) Date of publication and mention of the grant of the patent: **28.10.2026**
(21) Application number: 21184526.8
(22) Date of filing: 08.07.2021
(51) Int. Cl.: G01S 19/48, G01S 5/02

(54) **AUTOMATIC VEHICLE POSITIONING MANAGEMENT SYSTEM AND METHOD THEREOF**
AUTOMATISCHES FAHRZEUGPOSITIONIERUNGSMANAGEMENTSYSTEM UND VERFAHREN DAFÜR
SYSTÈME DE GESTION DE POSITIONNEMENT AUTOMATIQUE D'UN VÉHICULE ET PROCÉDÉ ASSOCIÉ

(43) Date of publication of application: 11.01.2023
(73) Proprietor: Sinbon Electronics Company Ltd., New Taipei City (TW)
(72) Inventor: HUANG, Hsiung-Ling, New Taipei City (TW); WU, Wei-Chih, New Taipei City (TW); LIN, Ming-Chieh, New Taipei City (TW)
(74) Representative: Viering, Jentschura & Partner mbB Patent- und Rechtsanwälte

(56) References cited:
- WO-A1-2021/048513
- TW-A- 200 835 238
- TW-U- M 560 062
- US-A1- 2017 215 037
- US-B1- 9 194 955

## Description

The present invention is related to an automatic vehicle positioning management system and method thereof, and especially to technologies that effectively resolve issues of GPS positioning errors and provide accurate positioning data for better vehicle fleet management.

Taiwan patent Publication No. 200835238 "A Real-Time Message Switching System for a Mobile Task Team" discloses a team management system and corresponding information sharing mechanism for a mobile task team, such that the members of the team can exchange information and communicate mutually in real time when they are on duty. Said system includes a real-time message switching server (RMSS), a mobile command station (MCS) and a mobile member station (MMS). The RMSS is constantly ready to connect to the MCS and the MMS for exchanging information upon which automatic or artificial decisions can be rendered. By utilizing the GPS receiver in the MMS installed on each vehicle, the position of each team member can be calculated to determine whether they are properly within the boundaries of their task ranges, and when any team member wanders beyond his/her task range, alarming signals and notifications will be sent out.

In addition, another prior art, Taiwan patent No. M560062 "Intelligent Bicycle System, Sensors Used Therein, Controllers and Controlled Devices" discloses sensors configured at a bicycle's pedals, wheel frames and inner sides of tires, so as to sense the operation status and surroundings of the bicycle and to generate corresponding sensing signals. The sensors will wirelessly connect and communicate with a controller and send said sensing signals to the controller. After processing the received sensing signals, the controller will generate a riding information and then display it to the user, and the controller also generates a control signal and sends it to a controlled device configured either at the front end or the tail of the bicycle. The controlled device wirelessly connects and communicates with the controller, and it also performs actions according to the received control signal.

The intelligent bicycle system further includes a cloud server which connects wirelessly with the controller to communicate with each other. The controller sends the received sensing signals to the cloud server for storage as records. When the controller of each of the fleet's bicycles connects wirelessly with the cloud server, the cloud server may assign a member of the fleet as the captain of the fleet. The captain's controller can instruct information regarding whether there is any fleet member dropping out or other situations. Therefore, the intelligent bicycle system provides internal management functionalities among members of the bicycle fleet.

According to the above-mentioned, current technologies can support information exchange functions to enable organizing a mobile task team and conducting fleet management. In addition, said intelligent bicycle system utilizes the sensors, the controller and the controlled device configured on the bicycle and connected to the cloud server, to assign a captain of the fleet and to instruct various information and situations as functions of the fleet management.

As for the fleet member drop out management, the position of each of the fleet members is crucial information. The aforesaid prior art patents all adopt GPS to do the positioning; however, it is well-known that GPS, as an extremely popular positioning technology, actually suffers from imprecision (30.48-609.6 cm). As a result of such imprecision, the located points which are actually on the roads could very often show up in nearby buildings instead. On the other hand, since GPS is based on signals from satellites, when a member of the fleet gets nearby a significantly large sized covering object, the signals from the satellites will tend to be blocked and then, the location of the member of the fleet will be null and misjudgments are likely to occur.

In sum, the fleet member drop out management that adopts GPS is well-known; however, the imprecision of the GPS that causes imprecise sensing of a member's location and misjudgments therefrom still needs to be tackled and resolved.

WO 2021048513 A1 recites a system (1) comprising at least two portable devices (2) each capable of being carried by a mobile entity (3) such as a sportsperson, wherein each device (2) comprises at least one GPS receiver (4) capable of determining a GPS position of the device (2), and at least one LPS sensor (5) capable of determining an LPS distance which separates the device (2) from each of the other devices (2). The invention relates to the field of location and/or timing systems, capable of tracking and/or timing a set of mobiles. In a second aspect of the invention, a portable device capable of being used with such a system, for a horse-type mobile, comprises a flexible strip incorporating a processing means and a battery preferably disposed substantially in the middle of the flexible strip and at least one GPS receiver and at least one LPS sensor arranged substantially at each end of the flexible strip. It appears that the data: date of transmission, date of reception, or distance DLᵢⱼ are produced at the level of 2 different devices. The different processing of these data most often use several such data. Also the system (1) according to the invention advantageously comprises a communication network which it uses to communicate the data between the various devices (2) and the processing means (6). The processing means (6) can be centralized or distributed, in one or more dedicated units, and/or merged with one or more devices (2). The communication network is advantageously wireless. It can be a dedicated radio frequency device, or based on an existing network, such as a GSM network.

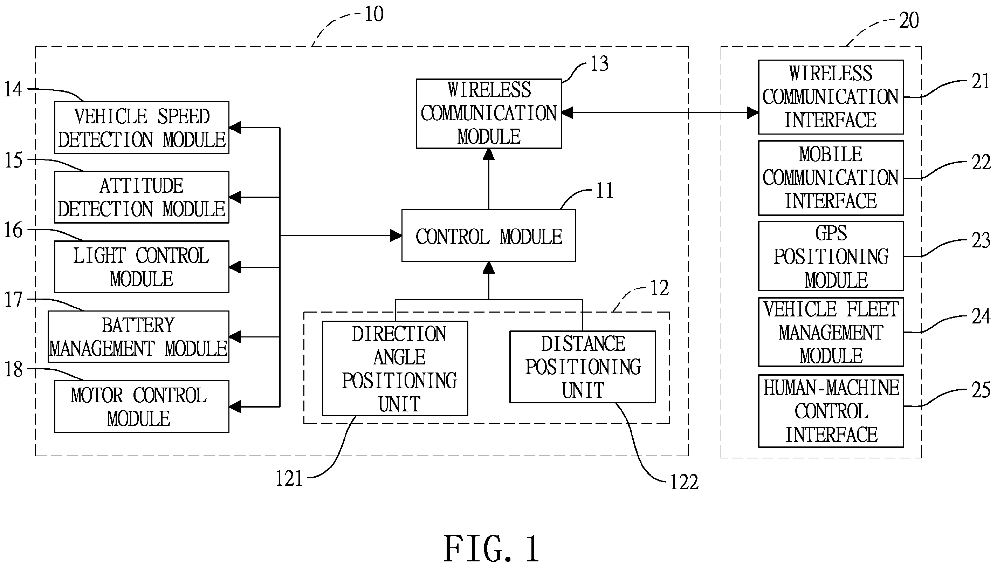

US 09194955 B1 recites a method for obtaining data and communicating with a bicycle mounted cloud based activity monitor is provided. The method includes accepting into a server a plurality of sensor data and GPS location coordinates from a device attached to a bicycle, wherein the activity monitor communicates data to the cloud server via a wireless coupling. The method further includes writing information relating to sensor, GPS, and alarm functions from the cloud based server into the bike mounted activity tracker via a wireless link. FIG. 1C is a perspective view of a wireless key fob 160, which activates and deactivates an alarm function or other functions of the bike GPS device 120 of FIGS. 1A and 1B. In various embodiments, the wireless key fob 160 or other wireless handheld device can operate via a Bluetooth network, and communicate to the wireless communication unit 128, or can operate via another wireless channel, protocol or device, to issue commands to activate or deactivate the alarm function or other functions. The key fob can act as a proximity sensor to automatically activate or deactivate functions. Various buttons 162, 164, 166, 168 on the wireless key fob 160 can perform fixed or programmable functions. A wireless handheld device can include an embodiment of the wireless key fob 160 that lacks the key ring but otherwise has similar features and functions, or is in some other shape. In some embodiments, a wireless handheld device can include a cell phone or any other cellular telephonic device. For example, a first button 162 of the wireless key fob 160 can activate a geo-fencing function of the bike GPS device 120. A second button 164 can deactivate the geo-fencing function. A third button 166 can activate a tracking function of the bike GPS device 120. Tracking can be turned off by pressing the same third button 166, or by pressing the second button 164, or by another mechanism. A fourth button 168 can activate the alarm unit 146, e.g., as a panic button. The buttons 162, 164, 166, 168 can be reprogrammed by downloading configuration information through the wireless communication unit 128 to the memory 124 of the bike GPS device 120. With reference to FIGS. 1A-1C, various functions and features can be implemented in embodiments of the bike GPS 120. These functions and features can operate in just the bike GPS device 120 alone, or in the bike GPS device 120 in combination or cooperation with a cellular telephonic device such as the cell phone 176, a server such as the cloud server 114, and/or the user device 118.

US 2017/215037 A1 recites methods, systems and devices for obtaining a range between devices based, at least in part, on an exchange of wireless messages. For example, wireless devices may obtain measurements of range based, at least in part, on an exchange fine timing measurement (FTM) message. In one implementation, an initial FTM request message may be transmitted from a first wireless transceiver device to a second wireless transceiver device comprising one or more parameters indicative of a request for transmission of FTM messages in a particular format. In a particular implementation, the mobile device 100 may be capable of computing a position fix based, at least in part, on signals acquired from local transmitters (e.g., WLAN access points positioned at known locations). For example, mobile devices may obtain a position fix by measuring ranges to three or more indoor terrestrial wireless access points which are positioned at known locations. Such ranges may be measured, for example, by obtaining a MAC ID address from signals received from such access points and obtaining range measurements to the access points by measuring one or more characteristics of signals received from such access points such as, for example, received signal strength (RSSI) or RTT. In alternative implementations, mobile device 100 may obtain an indoor position fix by applying characteristics of acquired signals to a radio heatmap indicating expected angle of arrival (AoA). In other alternative implementations, as pointed out above, mobile device 100 may obtain an indoor position fix by applying characteristics of acquired signals to a radio heatmap indicating expected TOF. Accordingly, a radio heatmap may comprise TOF, AoA, SI and/or RTT signatures at particular locations in an indoor area. In particular implementations, a radio heatmap may associate identities of local transmitters (e.g., a MAC address which is discernible from a signal acquired from a local transmitter), expected RSSI from signals transmitted by the identified local transmitters, an expected RTT from the identified transmitters, and possibly standard deviations from these expected AoA, TOF, RSSI or RTT. It should be understood, however, that these are merely examples of values that may be stored in a radio heatmap, and that claimed subject matter is not limited in this respect.

In view of the above-mentioned problems, the main purpose of the present invention is to provide an automatic vehicle positioning management system and method thereof, which mainly uses GPS for positioning, and further cooperates with another positioning technology to compensate and modify the GPS positioning points to provide more accurate positioning data, which is beneficial for fleet management.

The main technical means adopted to achieve the foregoing purpose is to provide an automatic vehicle positioning management system, including:
multiple fleet members, each fleet member comprising a respective on-vehicle apparatus (10) installed thereon,
multiple portable devices (20), each fleet member being associated with a respective portable device (20), and
a cloud server (30);
wherein
each on-vehicle apparatus (10) includes:
   a control module (11);
   a wireless positioning module (12) for direction angle positioning and distance positioning so as to generate wireless positioning data, and connected with the control module to send the wireless positioning data thereto, and
   a wireless communication module (13) connected to the control module (11), and adapted to connect to the respective portable device (20) to transmit the wireless positioning data; and
   each portable device (20) includes:
      a wireless communication interface (21), adapted to connect to the respective on-vehicle apparatus (10) to receive the wireless positioning data,
      a GPS positioning module (23) adapted to provide GPS positioning data including a GPS positioning point of the corresponding fleet member, and
      a mobile communication interface (22), adapted to transmit the wireless positioning data and the GPS positioning data;
   wherein
   the wireless positioning data received by the portable device (20) and the GPS positioning data provided by the portable device (20) are further subjected to calculations including point error analysis, image overlay and point error correction to correct errors of the GPS positioning data;
   wherein
   each portable device (20) is further adapted to connect to the cloud server (30) and to send the wireless positioning data and the GPS positioning data to the cloud server (30), and the cloud server (30) is adapted to perform the point error analysis, the image overlay and the point error correction to correct the GPS positioning data, and then to send back the corrected GPS positioning data to each portable device (20);
   wherein
   the automatic vehicle positioning management system is adapted to obtain respective wireless positioning points for the fleet members based on the wireless positioning data;
   wherein
   the cloud server (30) is adapted to perform the point error analysis to obtain two or more trusted wireless positioning points and two or more corresponding trusted GPS positioning points with least position errors; and
   wherein
   the cloud server (30) is adapted to perform image overlay on these trusted wireless positioning points and corresponding trusted GPS positioning points, and the wireless positioning points other than the trusted wireless positioning points are used to correct the GPS positioning points other than the trusted GPS positioning points.

Moreover, the main technical means adopted to achieve the foregoing purpose is to provide an automatic vehicle positioning management method performed by the automatic vehicle positioning management system which includes the following steps:
performing wireless positioning among the multiple feet members to obtain the multiple wireless positioning points respectively;
obtaining a GPS positioning point respectively for each fleet member via the respective GPS positioning module (23);
calculating a sum of offsets for the wireless positioning points and the GPS positioning points for each fleet member whose wireless positioning and GPS positioning both exist to obtain the two or more trusted wireless positioning points and the two or more corresponding trusted GPS positioning points with least position errors;
performing image overlay on these trusted wireless positioning points and corresponding trusted GPS positioning points;
wherein,
the wireless positioning points other than the trusted wireless positioning points are used to correct the GPS positioning points other than the trusted GPS positioning points.

In the aforementioned method, the advantages of high accuracy of wireless positioning technology are integrated with GPS positioning for its navigation map information. After positioning the fleet members through the GPS positioning and the wireless positioning at the same time, the wireless positioning points with low deviation errors are used to correct the GPS positioning points, such that the large errors of the GPS positioning points are compensated, and then the corrected GPS positioning points will be able to provide more accurate positioning and navigation information to facilitate fleet management and drop out monitoring.

### In the drawings:

Figure 1 is a block diagram of the automatic vehicle positioning management system of the present invention;
Figure 2 is a schematic view showing application of the automatic vehicle positioning management system of the present invention;
Figure 3 is a flow chart of the automatic vehicle positioning management method of the present invention;
Figure 4 is a schematic diagram of the present invention regarding the wireless positioning module performing direction angle positioning;
Figure 5 is a schematic diagram of the present invention regarding the wireless positioning module performing distance positioning;
Figure 6 is a schematic diagram of the present invention regarding integrating wireless positioning and GPS positioning;
Figure 7A is a schematic diagram of the present invention regarding using wireless positioning to generate the positioning points of each team member of the fleet;
Figure 7B is a schematic diagram of the present invention regarding using GPS positioning to generate the positioning points of each team member of the fleet;
Figure 8A is a schematic diagram of the present invention regarding calculating the relative distance of wireless positioning points;
Figure 8B is a schematic diagram of the present invention regarding calculating the relative distance of GPS positioning points;
Figure 9 is a schematic diagram of the present invention regarding offset corrections for the positioning points;
Figure 10A is a schematic diagram of the present invention regarding the radar mode provided by the vehicle fleet management module; and
Figure 10B is a schematic diagram of the present invention regarding the map mode provided by the vehicle fleet management module.

In the following, the technical solutions in the embodiments of the present invention will be clearly and fully described with reference to the drawings in the embodiments of the present invention. Obviously, the described embodiments are only a part of, not all of, the embodiments of the present invention. Based on the embodiments of the present invention, all other embodiments obtained by a person of ordinary skill in the art without creative efforts shall fall within the protection scope of the present invention if falling under the scope of the appended claims.

Regarding a preferred embodiment of the automatic vehicle positioning management system of the present invention, and for the convenience of description, the following embodiments will be for applications in bicycles and fleets thereof as examples, but it must be stated that it is illustrative only, and it is not meant to limit the fields in which the present invention can be applied, that is, in addition to bicycles, the present invention is also applicable to other vehicles with the fleet management requirements.

Please refer to Fig.1. An on-vehicle apparatus 10 and a portable device 20 are included, wherein, the on-vehicle apparatus 10 mainly consists of a control module 11, a wireless positioning module 12 and a wireless communication module 13. The control module 11 is the computing and processing center for the on-vehicle apparatus 10, and the control module 11 is connected with the wireless positioning module 12 and the wireless communication module 13. The control module 11 receives wireless positioning data generated by the wireless positioning module 12, and transmits the wireless positioning data to the portable device 20 through the wireless communication module 13. The control module 11 connects with the wireless positioning module 12 through CANBUS / UART / RS232 / RS485 / I²C / SPI / GPIO or other similar communication technologies.

In the present embodiment, the wireless positioning module 12 includes a direction angle positioning unit 121 and a distance positioning unit 122. The direction angle positioning unit 121 calculates the relative direction angle of the target using the time difference between radio waves reaching different antennas based on AOA / AOD or other similar technologies. The distance positioning unit 122 calculates the distance to the target based on the signal strength of radio waves or the time difference between a round trip using RSSI / TOF or other similar technologies. From the above-mentioned, the relative direction angle and distance of more than one target can be measured by the utilizing direction angle positioning unit 121 and the distance positioning unit 122 of the wireless positioning module 12.

Since the on-vehicle apparatus 10 is for installation on a bicycle, the on-vehicle apparatus 10 may be further equipped with various sensors to sense and provide various operating-related parameters of the bicycle, which can be used for fleet monitoring and management. The aforesaid sensors may be, but are not limited to, a vehicle speed detection module 14, an attitude detection module 15 and a light control module16. The vehicle speed detection module 14 generates a signal for calculating the vehicle speed by detecting a frequency of rotation of a wheel or its related mechanism, and the vehicle speed detection module 14 may include a Hall sensor. The attitude detection module 15 is used to detect the present attitude of the vehicle body, including acceleration, tilt angle, rotation angle, etc. The attitude detection module 15 can be composed of three-axis accelerometer, gyroscope or other similar technologies. The light control module 16 is used to control the front and rear headlights, direction lights and/or other warning lights.

When the on-vehicle apparatus 10 is used in an electric vehicle or an electric assisted bicycle, it can further include a battery management module 17 and a motor control module 18; the battery management module 17 is responsible for providing the power required for the operation of the bicycle and managing the battery charge and discharge cycle. The motor control module 18 drives the motor to provide assistive driving force for the bicycle to move forward.

The control module 11 serves as the computing and processing center of the on-vehicle apparatus 10. It will receive the data collected and/or generated from the aforementioned modules and perform preliminary edge computing, and then connect with the portable device 20 through the wireless communication module 13.

The portable device 20 includes, but is not limited to, a wireless communication interface 21, a mobile communication interface 22, a GPS positioning module 23, a vehicle fleet management module 24, and a human-machine control interface 25; wherein, the wireless communication interface 21 is connected wirelessly with the wireless communication module 13 of the vehicle apparatus 10, and a feasible way to realize such a connection is through Bluetooth^{®}. The GPS positioning module 23 generates positioning data by receiving satellite signals; the mobile communication interface 22 is used for connecting to a cloud server 30 and performing data exchange. The mobile communication can be 3G/4G/5G or similar mobile communication technologies.

The vehicle fleet management module 24 is used to provide users with various fleet management interface services, and the human-machine control interface 25 can be a combination of display/touch panel/voice control/external buttons. In this embodiment, the portable device 20 can be constituted by a mobile phone, the human-machine control interface 25 is a currently available human-machine interface of the mobile phone, and the vehicle fleet management module 24 can be constituted by an application program (abbreviated as App hereinafter) installed on the mobile phone.

In the present embodiment, the portable device 20 sends the received wireless positioning data and GPS positioning data generated by the GPS positioning module 23 to the cloud server 30 through the mobile communication interface 22 to perform positioning point error correction calculations.

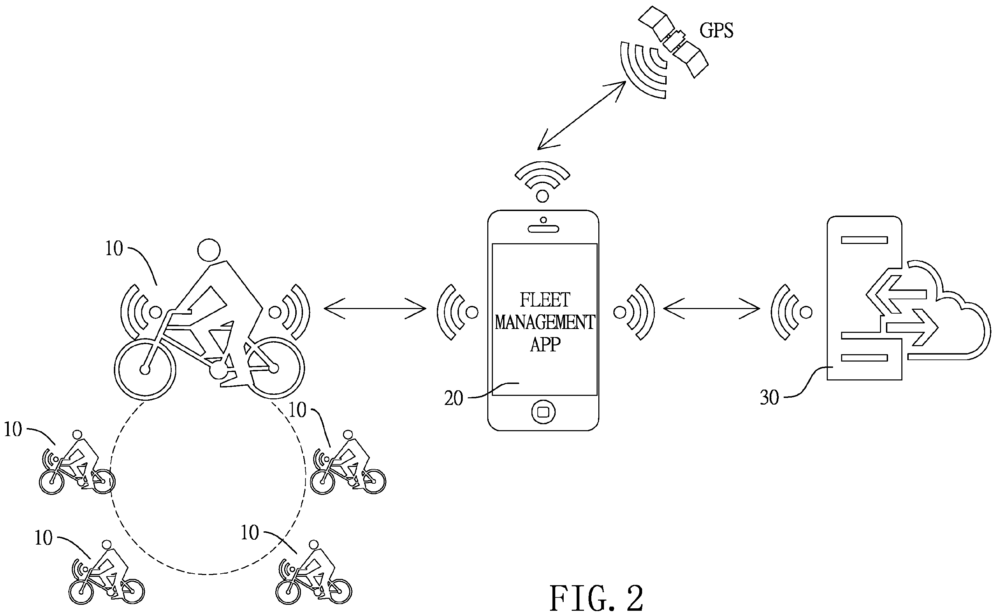

Regarding the specific application of the vehicle automatic positioning system of the present invention, please refer to Fig. 2. Each of multiple on-vehicle apparatuses 10 is respectively installed on the bicycle of each fleet member, and the wireless positioning data of each on-vehicle apparatus 10 is sent to the portable device 20 held by each member of the fleet, and then the portable device 20 sends the received wireless positioning data and self-generated GPS positioning data to a cloud server 30. After the correction calculation is performed on the cloud server 30, the corrected positioning data is returned to the portable device 20 with the accurate location of each member of the fleet to facilitate fleet management and to effectively monitor or avoid the situation of any team member dropping out of the team.

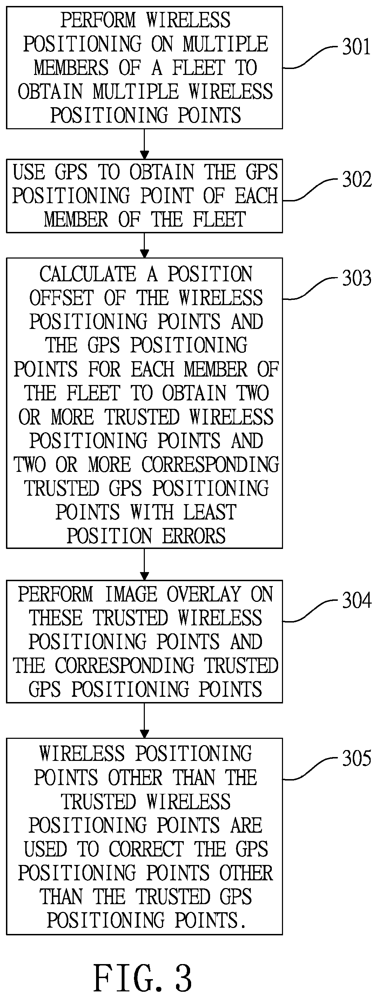

In cooperation with the above system, an automatic positioning management method implemented of the present invention includes the following steps (please refer to Figure 3):
Perform wireless positioning on multiple members of a fleet to obtain multiple wireless positioning points (301).

Use GPS to obtain the GPS positioning point of each member of the fleet (302).

Calculate a position offset of the wireless positioning points and the GPS positioning points for each member of the fleet to obtain two or more trusted wireless positioning points and two or more corresponding trusted GPS positioning points with least position errors (303).

Perform image overlay on these trusted wireless positioning points and the corresponding trusted GPS positioning points (304).

Use the wireless positioning points other than the trusted wireless positioning points to correct the GPS positioning points other than the trusted GPS positioning points.

The foregoing step (301) is mainly performed by the wireless positioning module 12 of the on-vehicle apparatus 10 to do positioning. Further, the members of the fleet use the wireless positioning module 12 of the on-vehicle apparatus 10 to perform direction angle positioning and distance positioning to each other.

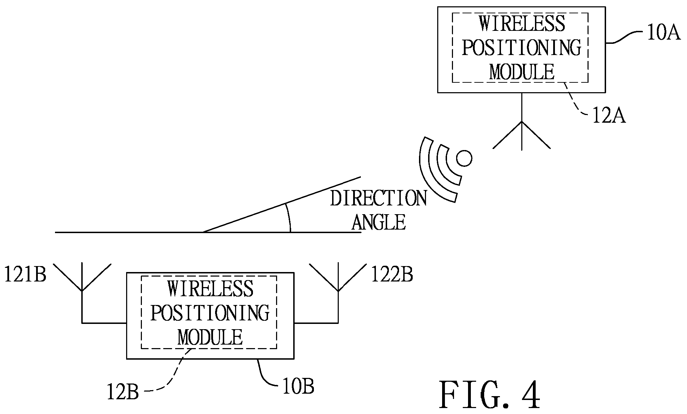

Please refer to Figure 4. Figure 4 is about the wireless positioning module 12 performing direction angle positioning. It is mainly to assign an on-vehicle apparatus 10A as a transmitter, and the wireless positioning module 12A of the on-vehicle apparatus 10A periodically sends out radio waves to allow other on-vehicle apparatus 10B (only one on-vehicle apparatus 10B is shown in Figure 4) to perform positioning, and the wireless positioning modules 12B of other on-vehicle apparatus 10B are used as the receiving ends to receive radio waves from the transmitter. The wireless positioning module 12B has a set of antenna array. The antenna array includes at least two antennas 121B and 122B. The two antennas 121B and 122B simultaneously receive radio waves from the transmitter. Based on the time difference between the two antenna 121B and 122B receiving the radio waves, the direction angle relative to the on-vehicle apparatus 10A can be calculated.

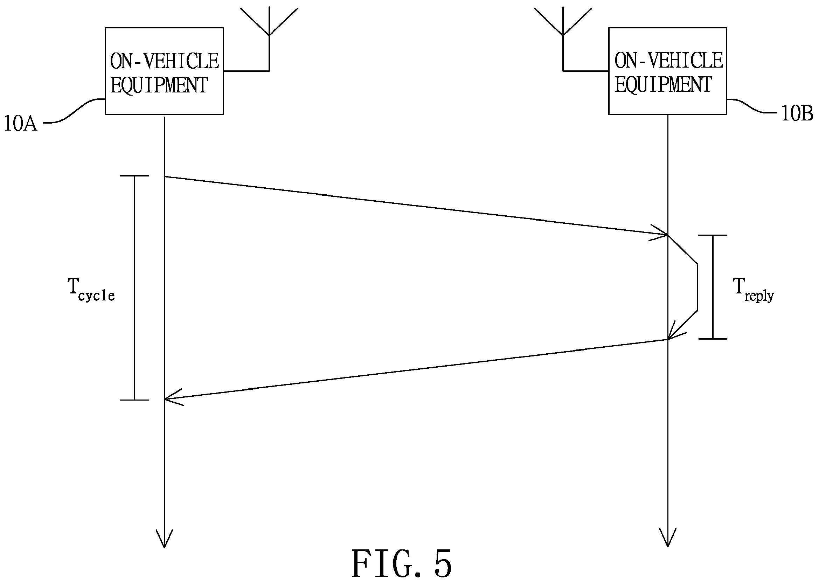

Please refer to Figure 5. Figure 5 further describes the techniques regarding distance positioning between on-vehicle apparatuses 10A and 10B. Mainly, an on-vehicle apparatus 10A, as an initiator, sends a positioning request signal. After receiving the positioning request and after an internal processing time interval (T_{reply}), another on-vehicle apparatus 10B sends back a positioning response signal to the on-vehicle apparatus 10A. After the on-vehicle apparatus 10A receives the positioning response signal, a round-trip time interval (T_{cycle}) of the positioning messages transmitting back and forth is calculated, and then the internal processing time (T_{reply}) is subtracted from the round-trip time interval (T_{cycle}) and then divided by 2 to obtain a one-trip time spent by the radio waves in the air ((T_{cycle} - T_{reply}) / 2), which is then further multiplied by the travel speed of the radio wave in the air to get a relative distance between on-vehicle apparatuses 10A and 10B.

Based on the above-mentioned, each on-vehicle apparatus 10 can calculate the relative direction angle and relative distance to another on-vehicle apparatus 10 by its wireless positioning module 12 using the aforementioned direction positioning and distance positioning. Although wireless positioning technology has low deviation error (less than 10 cm), it still has other limitations; for example, the effective range of wireless positioning must be within 60 meters, and not able to be directly combined with the map for lacking latitude and longitude. Hence the wireless positioning technology alone will have difficulties in positioning and tracking of the fleet members. Based on the above facts, the present invention takes advantage of the low deviation error of the wireless positioning to correct the GPS positioning data to provide high-accuracy positioning data that can be combined with map information.

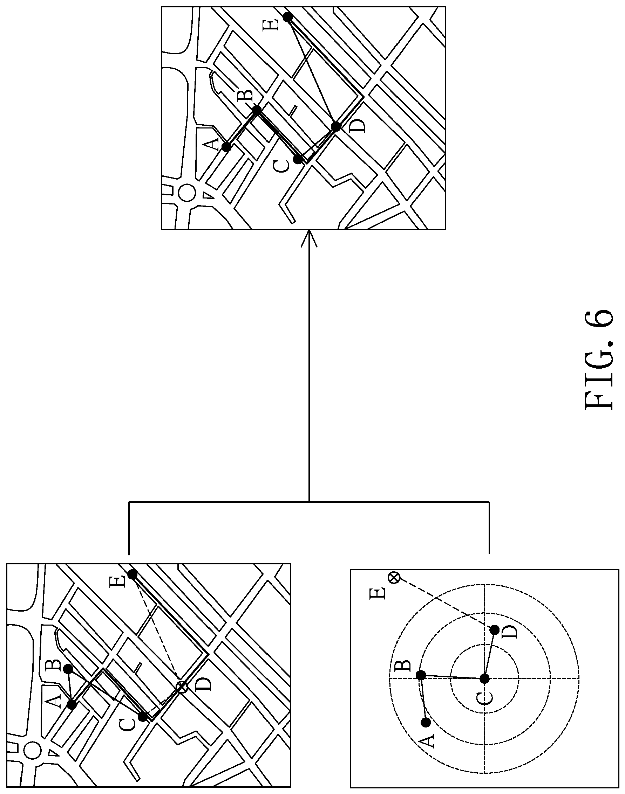

Please refer to Figure 6. Figure 6 shows a schematic diagram of the present invention regarding integrating wireless positioning and GPS positioning. The upper left diagram in Figure 6 shows the fleet positioning information generated by the GPS positioning module 23, which includes 5 members A to E. Because GPS positioning contains latitude and longitude, the fleet positioning information can be directly displayed on the navigation map; however the positioning accuracy tends to be poor, and due to obscured satellite signal obscuration, point offsets or null positioning (i.e. completely unable to locate) tend to occur.

Regarding the positioning of the five members A to E mentioned above, due to the relatively large GPS deviation error of the member B, the corresponding GPS positioning point has deviated from the road and shifted to a nearby building. The GPS location of member D is null (i.e. the location point disappears) due to factors such as obscured satellite signals.

The lower left diagram of Fig. 6 shows fleet positioning information generated through wireless positioning. As mentioned earlier, this positioning method has a low deviation error (less than 10 cm) and can accurately report the relative position of each member. However, because the position of the member E either exceeds the maximum range of wireless positioning (around 60m), or is obscured by buildings, the wireless positioning cannot obtain the relative position of the member E.

The automatic positioning management method of the present invention can integrate GPS positioning and wireless positioning, by combining the advantages of the two and compensating for each other's shortcomings, high-precision and map-compatible positioning information can be generated. As shown in the right diagram of Figure 6, the positioning points generated by wireless positioning will be used to modify the GPS positioning points to restore them to their actual positions, and the GPS positioning will retrieve the position of the member E who is outside the effective range of the wireless positioning. The specific detail of integrating wireless positioning and GPS positioning will be described below.

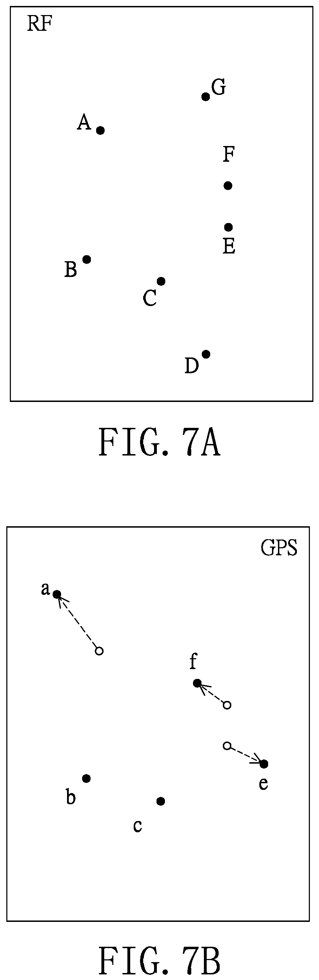

As shown in Fig. 7A, wireless positioning is used to generate the relative positions of each member A to G of a fleet, and Fig. 7B is about the relative position of each member a to g of the same fleet using GPS positioning. By comparing Figs. 7A and 7B, it shows that the GPS positioning has point errors regarding the relative positions of the three members a, f, and e, and because of the obscured satellite signal, the GPS positions d and g are null (i.e. not available).

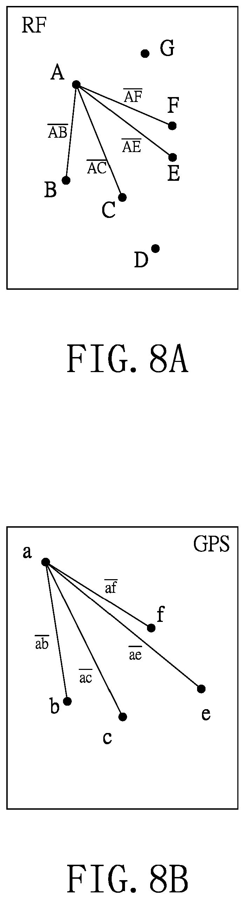

Then proceed to the step (303) shown in Figure 3, and calculate position offsets for members A, B, C, E, F and a, b, c, e, f whose wireless positioning and GPS positioning both exist. Please refer to Figure 8A. Among the members who have obtained wireless positioning, the positioning point of member A is first used as a reference point to calculate the relative distances between positioning point of member A and other positioning points of members B, C, E, F, namely A̅B̅, A̅C̅, A̅E̅, A̅F̅. Please refer to Figure 8B. Among the members who have obtained GPS positioning, the corresponding positioning point of member "a" is also used as a reference point to calculate the relative distances between positioning point of member "a" and other positioning points of members b, c, e, f, namely a̅b̅, a̅c̅, a̅e̅ and a̅f̅. And a sum of the offsets **A_{offset}** is about the sum of the absolute values of the differences between the wireless positioning distances between member A and other members B, C, E, F and corresponding GPS positioning distances between member "a" and other members b, c, e, f. The sum of the offsets **A_{offset}** can be obtained through the following formula: ${A}_{offset} = {\sum }_{K = B , j = b}^{K = F , j = f} abs \left(\overline{AK}-\overline{aj}\right)$

Where **abs()** is an absolute value function and the variable K is enumerated from B to C, E to F, and the corresponding variable j is enumerated from b to c, e to f.

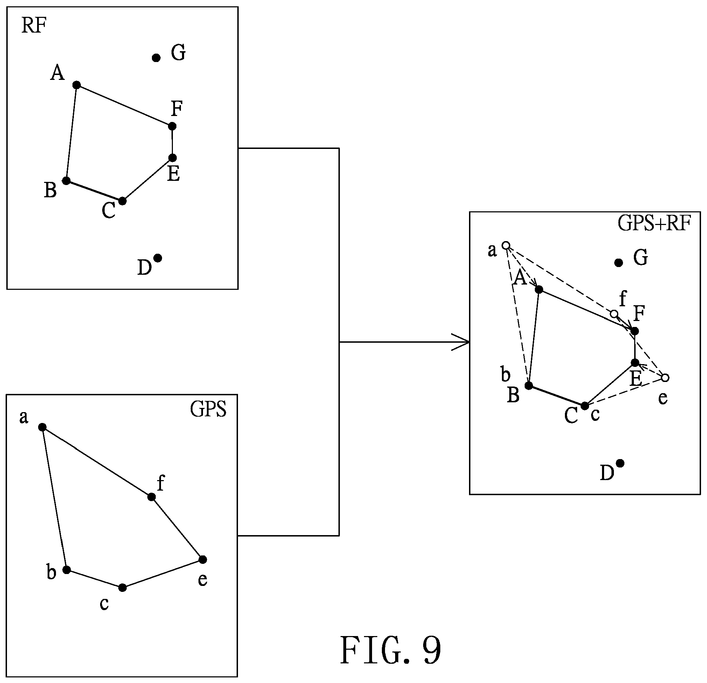

After obtaining the sum of the offsets for each of the members A, B, C, E, F (a, b, c, e, f), pick N members with the smallest sum of the offsets as reference members, where N is greater or equal to 2. In this embodiment, N is 2, that is, the two members B(b) and C(c) have the smallest sum of the offsets and are taken as the reference members accordingly. Next, perform the image overlay of the step (304) in Figure 3, and as shown in Figure 9, it is mainly to overlay the reference members' (B, C and b, c) wireless positioning points (the upper left diagram of Figure 9) with the GPS positioning points (the lower left diagram of Figure 9). And then, as the step (305) shown in Figure 3, use the other members' (A, E, F and a, e, f) wireless positioning points to correct the corresponding GPS positioning points. And then, further supplement the null (i.e. missing) GPS positioning points of members d and g with the wireless positioning points of members D and G to complete the corrected GPS positioning data as shown in the right diagram of Figure 9.

The wireless positioning diagram as shown in Fig. 9 can be rotated to any angle without affecting the final results of the calculation and the image overlay.

From the above, it can be seen that the automatic positioning management system and method thereof of the present invention integrates wireless positioning with small deviation errors and GPS positioning that can be loaded into a map, so as to generate a highly accurate positioning mechanism which is beneficial to fleet management. In cooperation with the on-vehicle apparatus 10, various sensing modules and the vehicle fleet management module 24 installed on the portable device 20 are able to provide a variety of real-time warning messages, including the conditions of the vehicles in front, vehicles coming from behind, team members dropping out of the team, insufficient battery power of the team members and other emergency situations that can be detected. The human-machine control interface 25 of the portable device 20 can be used in conjunction with sounds, vibrations or other messages to make it easier for the team members to detect.

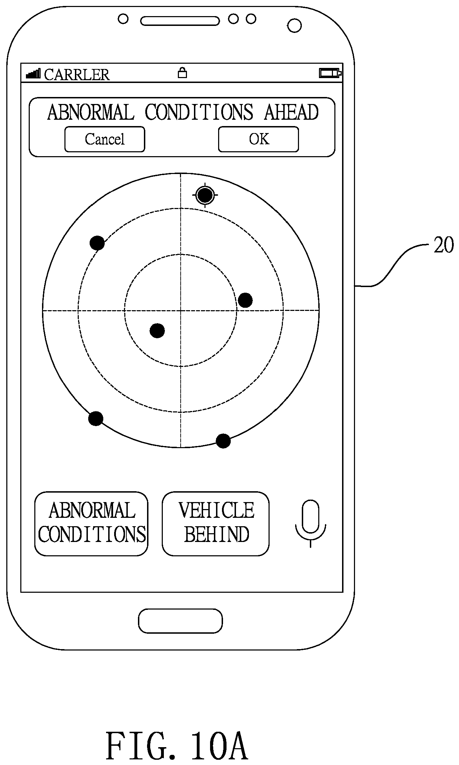

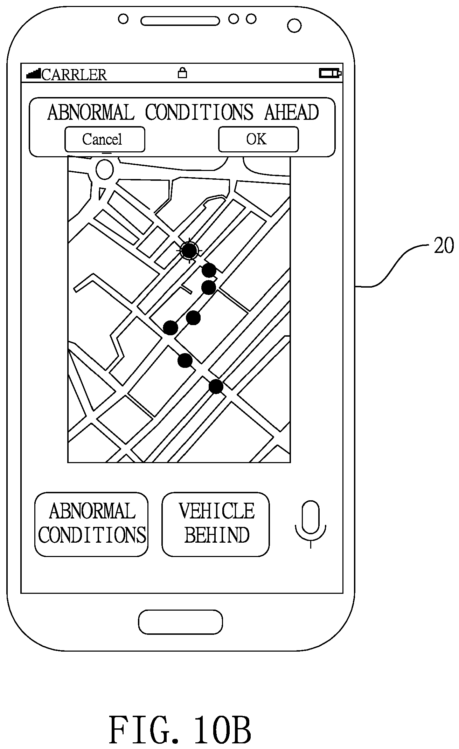

In terms of fleet management, the vehicle fleet management module 24 can provide a radar mode as shown in Fig. 10A to mark the real-time locations and distances of fleet members, and can also provide a map mode as shown in Fig. 10B in the form of a navigation map to mark the real-time locations of fleet members.

The aforementioned are preferred embodiments of the present invention. It should be noted that for those of ordinary skill in the art, without departing from the principles of the present invention, certain improvements and retouches of the present invention can still be made which are nevertheless considered as within the protection scope of the present invention as long as they fall under the scope of the claims.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the scope of the claims.

## Claims

1. An automatic vehicle positioning management system, including:
multiple fleet members, each fleet member comprising a respective on-vehicle apparatus (10) installed thereon,
multiple portable devices (20), each fleet member being associated with a respective portable device (20), and
a cloud server (30);
wherein
each on-vehicle apparatus (10) includes:
a control module (11);
a wireless positioning module (12) for direction angle positioning and distance positioning so as to generate wireless positioning data, and connected with the control module (11) to send the wireless positioning data thereto, and
a wireless communication module (13) connected to the control module (11), and adapted to connect to the respective portable device (20) to transmit the wireless positioning data; and
each portable device (20) includes:
a wireless communication interface (21), adapted to connect to the respective on-vehicle apparatus (10) to receive the wireless positioning data;
a GPS positioning module (23), adapted to provide GPS positioning data including a GPS positioning point of the corresponding fleet member, and
a mobile communication interface (22), adapted to transmit the wireless positioning data and the GPS positioning data;
wherein
the wireless positioning data received by the portable device (20) and the GPS positioning data provided by the portable device (20) are further subjected to calculations including point error analysis, image overlay and point error correction to correct errors of the GPS positioning data;
wherein
each portable device (20) is further adapted to connect to the cloud server (30) and to send the wireless positioning data and the GPS positioning data to the cloud server (30), and the cloud server (30) is adapted to perform the point error analysis, the image overlay and the point error correction to correct the GPS positioning data, and then to send back the corrected GPS positioning data to each portable device (20);
wherein
the automatic vehicle positioning management system is adapted to obtain respective wireless positioning points for the fleet members based on the wireless positioning data;
wherein
the cloud server (30) is adapted to perform the point error analysis to obtain two or more trusted wireless positioning points and two or more corresponding trusted GPS positioning points with least position errors; and
wherein
the cloud server (30) is adapted to perform image overlay on these trusted wireless positioning points and corresponding trusted GPS positioning points, and the wireless positioning points other than the trusted wireless positioning points are used to correct the GPS positioning points other than the trusted GPS positioning points.

2. The automatic vehicle positioning management system as claimed in claim 1, wherein each on-vehicle apparatus (10) further includes a vehicle speed detection module (14), an attitude detection module (15) and a light control module (16).

3. The automatic vehicle positioning management system as claimed in claim 2, wherein each on-vehicle apparatus (10) further includes a battery management module (17) and a motor control module (18).

4. The automatic vehicle positioning management system as claimed in claim 1, wherein each portable device (20) further includes a vehicle fleet management module (24) and a human-machine control interface (25).

5. The automatic vehicle positioning management system as claimed in claim 4, wherein each portable device (20) is a mobile phone, and the vehicle fleet management module (24) is an application program (App) installed on the mobile phone to provide a radar mode and a map mode.

6. An automatic vehicle positioning management method performed by the automatic vehicle positioning management system of any of claims 1-5, including:
performing wireless positioning among the multiple fleet members to obtain the multiple wireless positioning points respectively;
obtaining a GPS positioning point respectively for each fleet member via the respective GPS positioning module (23);
calculating a sum of offsets for the wireless positioning points and the GPS positioning points for each member of the fleet whose wireless positioning and GPS positioning both exist to obtain the two or more trusted wireless positioning points and the two or more corresponding trusted GPS positioning points with least position errors;
performing image overlay on these trusted wireless positioning points and corresponding trusted GPS positioning points;
wherein, the wireless positioning points other than the trusted wireless positioning points are used to correct the GPS positioning points other than the trusted GPS positioning points.

7. The automatic vehicle positioning management method as claimed in claim 6, wherein the calculation of the offsets of the wireless positioning points and the GPS positioning points is firstly to obtain two trusted wireless positioning points and two corresponding trusted GPS positioning points with least position errors, and then to perform image overlay on the two trusted wireless positioning points and the two corresponding trusted GPS positioning points.

8. The automatic vehicle positioning management method as claimed in claim 6, wherein, the wireless positioning determines the relative positions and distances between the wireless positioning points through the direction angle positioning and the distance positioning.

9. The automatic vehicle positioning management method as claimed in claim 6, wherein, corrected GPS positioning points are further supplemented with missing GPS positioning points according to the wireless positioning points.

10. The automatic vehicle positioning management method as claimed in claim 6, wherein, corrected GPS positioning points are further supplemented with wireless positioning points located outside an effective range.

## Patentansprüche

1. Automatisches Fahrzeugpositioniermanagementsystem, aufweisend:
mehrere Flottenmitglieder, wobei jedes Flottenmitglied eine jeweilige daran installierte fahrzeugseitige Vorrichtung (10) aufweist,
mehrere tragbare Vorrichtungen (20), wobei jedes Flottenmitglied mit einer jeweiligen tragbaren Vorrichtung (20) assoziiert ist, und
einen Cloud-Server (30);
wobei
jede fahrzeugseitige Vorrichtung (10) aufweist:
ein Steuermodul (11);
ein Drahtlospositioniermodul (12) zur Richtungswinkelpositionierung und Entfernungspositionierung, um Drahtlospositionierdaten zu erzeugen, und das mit dem Steuermodul (11) verbunden ist, um die Drahtlospositionierdaten an dieses zu senden, und
ein Drahtloskommunikationsmodul (13), das mit dem Steuermodul (11) verbunden ist und angepasst ist, um mit der jeweiligen tragbaren Vorrichtung (20) verbunden zu sein, um die Drahtlospositionierdaten zu übermitteln; und
jede tragbare Vorrichtung (20) aufweist:
eine Drahtloskommunikationsschnittstelle (21), die angepasst ist, um mit der jeweiligen fahrzeugseitigen Vorrichtung (10) verbunden zu sein, um die Drahtlospositionierdaten zu empfangen;
ein GPS-Positioniermodul (23), das angepasst ist, um GPS-Positionierdaten bereitzustellen, die einen GPS-Positionierpunkt des korrespondierenden Flottenmitglieds aufweisen, und
eine Mobilkommunikationsschnittstelle (22), die angepasst ist, um die Drahtlospositionierdaten und die GPS-Positionierdaten zu übermitteln;
wobei
die von der tragbaren Vorrichtung (20) empfangenen Drahtlospositionierdaten und die von der tragbaren Vorrichtung (20) bereitgestellten GPS-Positionierdaten ferner Berechnungen unterzogen werden, die eine Punktfehleranalyse, eine Bildüberlagerung und eine Punktfehlerkorrektur aufweisen, um Fehler der GPS-Positionierdaten zu korrigieren;
wobei
jede tragbare Vorrichtung (20) ferner angepasst ist, um mit dem Cloud-Server (30) verbunden zu sein und die Drahtlospositionierdaten und die GPS-Positionierdaten an den Cloud-Server (30) zu senden, und der Cloud-Server (30) angepasst ist, um die Punktfehleranalyse, die Bildüberlagerung und die Punktfehlerkorrektur durchzuführen, um die GPS-Positionierdaten zu korrigieren, und anschließend die korrigierten GPS-Positionierdaten an jede tragbare Vorrichtung (20) zurückzusenden;
wobei
das automatische Fahrzeugpositioniermanagementsystem angepasst ist, um basierend auf den Drahtlospositionierdaten jeweilige Drahtlospositionierpunkte für die Flottenmitglieder zu erhalten;
wobei
der Cloud-Server (30) angepasst ist, um die Punktfehleranalyse durchzuführen, um zwei oder mehr vertrauenswürdige Drahtlospositionierpunkte und zwei oder mehr korrespondierende vertrauenswürdige GPS-Positionierpunkte mit den geringsten Positionsfehlern zu erhalten; und
wobei
der Cloud-Server (30) angepasst ist, um eine Bildüberlagerung an diesen vertrauenswürdigen Drahtlospositionierpunkten und korrespondierenden vertrauenswürdigen GPS-Positionierpunkten durchzuführen, und die Drahtlospositionierpunkte, die nicht die vertrauenswürdigen Drahtlospositionierpunkte sind, verwendet werden, um die GPS-Positionierpunkte, die nicht die vertrauenswürdigen GPS-Positionierpunkte sind, zu korrigieren.

2. Automatisches Fahrzeugpositioniermanagementsystem gemäß Anspruch 1, wobei jede fahrzeugseitige Vorrichtung (10) ferner ein Fahrzeuggeschwindigkeitsdetektionsmodul (14), ein Lagedetektionsmodul (15) und ein Lichtsteuermodul (16) aufweist.

3. Automatisches Fahrzeugpositioniermanagementsystem gemäß Anspruch 2, wobei jede fahrzeugseitige Vorrichtung (10) ferner ein Batteriemanagementmodul (17) und ein Motorsteuermodul (18) aufweist.

4. Automatisches Fahrzeugpositioniermanagementsystem gemäß Anspruch 1, wobei jede tragbare Vorrichtung (20) ferner ein Fahrzeugflottenmanagementmodul (24) und eine Mensch-Maschine-Steuerschnittstelle (25) aufweist.

5. Automatisches Fahrzeugpositioniermanagementsystem gemäß Anspruch 4, wobei jede tragbare Vorrichtung (20) ein Mobiltelefon ist und das Fahrzeugflottenmanagementmodul (24) ein auf dem Mobiltelefon installiertes Anwendungsprogramm (App) ist, um einen Radarmodus und einen Kartenmodus bereitzustellen.

6. Automatisches-Fahrzeugpositioniermanagement-Verfahren, das von dem automatischen Fahrzeugpositioniermanagementsystem gemäß irgendeinem der Ansprüche 1-5 ausgeführt wird, aufweisend:
Durchführen einer Drahtlospositionierung unter den mehreren Flottenmitgliedern, um jeweils die mehreren Drahtlospositionierpunkte zu erhalten;
Erhalten eines GPS-Positionierpunktes jeweils für jedes Flottenmitglied über das jeweilige GPS-Positioniermodul (23);
Berechnen einer Summe von Abweichungen für die Drahtlospositionierpunkte und die GPS-Positionierpunkte für jedes Flottenmitglied, für das sowohl eine Drahtlospositionierung als auch eine GPS-Positionierung vorliegen, um die zwei oder mehr vertrauenswürdigen Drahtlospositionierpunkte und die zwei oder mehr korrespondierenden vertrauenswürdigen GPS-Positionierpunkte mit den geringsten Positionsfehlern zu erhalten;
Durchführen einer Bildüberlagerung an diesen vertrauenswürdigen Drahtlospositionierpunkten und korrespondierenden vertrauenswürdigen GPS-Positionierpunkten;
wobei die Drahtlospositionierpunkte, die nicht die vertrauenswürdigen Drahtlospositionierpunkte sind, verwendet werden, um die GPS-Positionierpunkte zu korrigieren, die nicht die vertrauenswürdigen GPS-Positionierpunkte sind.

7. Automatisches-Fahrzeugpositioniermanagement-Verfahren gemäß Anspruch 6, wobei das Berechnen der Abweichungen der Drahtlospositionierpunkte und der GPS-Positionierpunkte zuallererst dazu dient, zwei vertrauenswürdige Drahtlospositionierpunkte und zwei korrespondierende vertrauenswürdige GPS-Positionierpunkte mit den geringsten Positionsfehlern zu erhalten und anschließend eine Bildüberlagerung an den beiden vertrauenswürdigen Drahtlospositionierpunkten und den beiden korrespondierenden vertrauenswürdigen GPS-Positionierpunkten durchzuführen.

8. Automatisches-Fahrzeugpositioniermanagement-Verfahren gemäß Anspruch 6, wobei das Drahtlospositionieren die relativen Positionen und Entfernungen zwischen den Drahtlospositionierpunkten durch die Richtungswinkelpositionierung und die Entfernungspositionierung ermittelt.

9. Automatisches-Fahrzeugpositioniermanagement-Verfahren gemäß Anspruch 6, wobei korrigierte GPS-Positionierpunkte zusätzlich durch fehlende GPS-Positionierpunkte gemäß den Drahtlospositionierpunkten ergänzt werden.

10. Automatisches-Fahrzeugpositioniermanagement-Verfahren gemäß Anspruch 6, wobei korrigierte GPS-Positionierpunkte zusätzlich durch Drahtlospositionierpunkte ergänzt werden, die sich außerhalb eines Wirkbereichs befinden.

## Revendications

1. Système de gestion de positionnement de véhicule automatique, comprenant :
plusieurs membres de flotte, chaque membre de flotte comportant un appareil embarqué (10) respectif qui y est installé,
plusieurs dispositifs portables (20), chaque membre de flotte étant associé à un dispositif portable (20) respectif, et
un serveur cloud (30) ;
dans lequel
chaque appareil embarqué (10) comprend :
un module de commande (11) ;
un module de positionnement sans fil (12) destiné au positionnement d'angle de direction et au positionnement en distance de manière à générer des données de positionnement sans fil, et connecté au module de commande (11) pour lui envoyer les données de positionnement sans fil, et
un module de communication sans fil (13) connecté au module de commande (11), et adapté pour se connecter au dispositif portable respectif (20) afin de transmettre les données de positionnement sans fil ; et
chaque dispositif portable (20) comprend :
une interface de communication sans fil (21), adaptée pour se connecter à l'appareil embarqué respectif (10) afin de recevoir les données de positionnement sans fil ;
un module de positionnement GPS (23), adapté pour fournir des données de positionnement GPS comprenant un point de positionnement GPS du membre de flotte correspondant, et
une interface de communication mobile (22), adaptée pour transmettre les données de positionnement sans fil et les données de positionnement GPS ;
dans lequel
les données de positionnement sans fil reçues par le dispositif portable (20) et les données de positionnement GPS fournies par le dispositif portable (20) sont en outre soumises à des calculs comprenant une analyse d'erreur de point, une superposition d'images et une correction d'erreur de point afin de corriger des erreurs des données de positionnement GPS ;
dans lequel
chaque dispositif portable (20) est en outre adapté pour se connecter au serveur cloud (30) et pour envoyer les données de positionnement sans fil et les données de positionnement GPS au serveur cloud (30), et le serveur cloud (30) est adapté pour effectuer l'analyse d'erreur de point, la superposition d'images et la correction d'erreur de point afin de corriger les données de positionnement GPS, puis pour renvoyer les données de positionnement GPS corrigées à chaque dispositif portable (20) ;
dans lequel
le système de gestion de positionnement de véhicule automatique est adapté pour obtenir des points de positionnement sans fil respectifs pour les membres de flotte sur la base des données de positionnement sans fil ;
dans lequel
le serveur cloud (30) est adapté pour effectuer l'analyse d'erreur de point afin d'obtenir deux points de positionnement sans fil fiables ou plus et deux points de positionnement GPS fiables correspondants ou plus présentant les erreurs de position les plus faibles ; et
dans lequel
le serveur cloud (30) est adapté pour effectuer une superposition d'images sur ces points de positionnement sans fil fiables et les points de positionnement GPS fiables correspondants, et les points de positionnement sans fil autres que les points de positionnement sans fil fiables sont utilisés pour corriger les points de positionnement GPS autres que les points de positionnement GPS fiables.

2. Système de gestion de positionnement de véhicule automatique selon la revendication 1, dans lequel chaque appareil embarqué (10) comprend en outre un module de détection de vitesse de véhicule (14), un module de détection d'attitude (15) et un module de commande d'éclairage (16).

3. Système de gestion de positionnement de véhicule automatique selon la revendication 2, dans lequel chaque appareil embarqué (10) comprend en outre un module de gestion de batterie (17) et un module de commande de moteur (18).

4. Système de gestion de positionnement de véhicule automatique selon la revendication 1, dans lequel chaque dispositif portable (20) comprend en outre un module de gestion de flotte de véhicules (24) et une interface de commande homme-machine (25).

5. Système de gestion de positionnement de véhicule automatique selon la revendication 4, dans lequel chaque dispositif portable (20) est un téléphone mobile, et le module de gestion de flotte de véhicules (24) est un programme d'application (App) installé sur le téléphone mobile pour fournir un mode radar et un mode carte.

6. Procédé de gestion de positionnement de véhicule automatique mis en œuvre par le système de gestion de positionnement de véhicule automatique selon l'une quelconque des revendications 1 à 5, comprenant :
la réalisation d'un positionnement sans fil parmi les plusieurs membres de flotte afin d'obtenir respectivement les plusieurs points de positionnement sans fil ;
l'obtention d'un point de positionnement GPS respectif pour chaque membre de flotte via le module de positionnement GPS respectif (23) ;
le calcul d'une somme d'écarts pour les points de positionnement sans fil et les points de positionnement GPS pour chaque membre de la flotte dont un positionnement sans fil et un positionnement GPS existent tous deux, afin d'obtenir les deux points de positionnement sans fil fiables ou plus et les deux points de positionnement GPS fiables ou plus correspondants présentant les erreurs de position les plus faibles ;
l'exécution d'une superposition d'images sur ces points de positionnement sans fil fiables et les points de positionnement GPS fiables correspondants ;
dans lequel les points de positionnement sans fil autres que les points de positionnement sans fil fiables sont utilisés pour corriger les points de positionnement GPS autres que les points de positionnement GPS fiables.

7. Procédé de gestion de positionnement de véhicule automatique selon la revendication 6, dans lequel le calcul des écarts des points de positionnement sans fil et des points de positionnement GPS vise d'abord à obtenir deux points de positionnement sans fil fiables et deux points de positionnement GPS fiables correspondants présentant les erreurs de position les plus faibles, puis à effectuer une superposition d'images sur les deux points de positionnement sans fil fiables et les deux points de positionnement GPS fiables correspondants.

8. Procédé de gestion de positionnement de véhicule automatique selon la revendication 6, dans lequel le positionnement sans fil détermine les positions relatives et les distances entre les points de positionnement sans fil par le biais du positionnement d'angle de direction et du positionnement en distance.

9. Procédé de gestion de positionnement de véhicule automatique selon la revendication 6, dans lequel les points de positionnement GPS corrigés sont en outre complétés par des points de positionnement GPS manquants en fonction des points de positionnement sans fil.

10. Procédé de gestion de positionnement de véhicule automatique selon la revendication 6, dans lequel des points de positionnement GPS corrigés sont en outre complétés par des points de positionnement sans fil situés en dehors d'une portée effective.
